# EUROPEAN PATENT SPECIFICATION

(11) **EP 2 511 513 B1**
(45) Date of publication and mention of the grant of the patent: **21.05.2014**
(21) Application number: 09811519.9
(22) Date of filing: 02.09.2009
(51) Int. Cl.: F02M 37/22, B01D 29/11, B01D 29/50, B01D 35/02, B01D 35/147, F02M 37/10, B01D 29/58

(54) **FUEL FILTER**
KRAFTSTOFFFILTER
FILTRE À COMBUSTIBLE

(30) Priority: 03.09.2008 JP 2008226118; 14.01.2009 JP 2009005623
(43) Date of publication of application: 17.10.2012
(73) Proprietor: Nifco INC., Yokohama-shi, Kanagawa 244-8522 (JP)
(72) Inventor: OGOSE, Kensuke, Yokohama-shi Kanagawa 244-8522 (JP)
(74) Representative: Gassner, Wolfgang
(86) International application number: PCT/JP2009/065354
(87) International publication number: WO 2010/026994

(56) References cited:
- EP-A1- 2 133 130
- EP-A2- 1 994 974
- WO-A1-99/15777
- DE-U1-202007 001 227
- JP-A- 9 010 503
- JP-A- 2007 275 786
- JP-U- 2 107 866
- JP-U- 4 037 511
- JP-Y2- 61 029 966

## Description

### Field of Technology

The invention relates to an improvement of a filter which is used for filtering fuel in a system sucking and supplying stored fuel having a property of lowering fluidity by a temperature change.

### Background Art

There is a filter device for light oil placed inside a fuel tank, which sucks the light oil by a bypass pipe when the filter is clogged with the light oil whose fluidity is lowered by the temperature change. (See Patent Document 1)

However, such filter device could never filter the light oil sucked through the bypass pipe when the fluidity was lowered. Also, in a case when a fluid surface level of the fuel was lowered lower than a mouth of a pipe of the bypass pipe, the fuel could not be sucked in through the bypass pipe.

### Prior Art Document

### Patent Document

Patent Document 1: Japanese Utility Model Publication No. S61-29966

International publication WO 99/15 777 A1 describes a bag-shaped fuel filter comprising a bypass-valve that opens when the filter is clogged.

German utility model DE 20 2007 001 227 U1 discloses an oil filter providing the same function without the need of a valve. It comprises an opening with a blocking body arranged therein to form a restriction.

### Summary of the Invention

### Problems to be Solved by the Invention

Objects which the present invention attempts to achieve are, at first, in this kind of fuel filter, to provide a filter with a simple structure comprising a function of allowing the fuel to flow into a fuel flow passage through a communicating portion without allowing the fuel to pass through a main filter only when the fuel is lowered in fluidity by the temperature change. Also, secondly, filtering by a pre-filter can be carried out even for the fuel received from the communicating portion in the above-mentioned manner, and the fuel can be sucked up through the communicating portion without any effect of a decline in the fluid surface level of the stored fuel.

### Means for Solving the Problems

In order to achieve the above-mentioned objects, in the present invention, a fuel filter is provided according to claim 1. It comprises a communicating portion between the inside and outside of a bag in a bag-shaped filter medium which is used by communicating an internal space with a fuel flow passage. Also, an interval between inner walls, which constitute this communicating portion and are located at opposite positions, has a size so as to usually allow the fuel to stagnate in the communicating portion by a surface tension. Also, the interval between the inner walls has a size so as to allow this fuel which has been lowered in fluidity to flow into the bag-shaped filter medium when the bag-shaped filter medium is clogged with the fuel which has been lowered in fluidity by a temperature change.

Usually, the fuel never passes through the communicating portion where the fuel stagnates, and is sent to the fuel flow passage by passing through the bag-shaped filter medium. In a case when the fuel is lowered in fluidity by the temperature change, if the bag-shaped filter medium is clogged with such fuel, the inside of the bag-shaped filter medium is a negative pressure due to the suction of the fuel, so that a pressure difference between the inside and outside of this bag-shaped filter medium becomes significantly large. In the fuel filter constituted in the above-mentioned manner, in such a case, stagnation of the fuel into the communicating portion is resolved, and the fuel can be sent to the fuel flow passage through this communicating portion.

If such communicating portion is divided into plural flow passages by a dividing wall ranging between the inner walls which constitute this communicating portion and are located at the opposite positions, the entry of the fuel into the bag-shaped filter medium through the communicating portion at a normal time, can be further prevented.

Also, due to the dividing wall ranging between the inner walls which constitute this communicating portion and are located at the opposite positions, if a portion, ranging from a primary side opening which becomes an opening of a bag outside of the bag-shaped filter medium in this communicating portion and a secondary side opening which becomes an opening of the bag inside of the bag-shaped filter medium in the communicating portion, is made as a meandering flow passage, the entry of the fuel into the bag-shaped filter medium through the communicating portion at the normal time, can be further prevented.

Preferably, the above-mentioned communicating portion is covered from the outside of the bag-shaped filter medium by an outside filter medium constituted so as to be coarser than this bag-shaped filter medium. If a cover body, combined with the communicating portion from the outside of the bag-shaped filter medium, functions as the outside filter medium, a portion having the same function as that of the outside filter medium can be adequately provided in the bag-shaped filter medium including the communicating portion in the minimum necessary range. Also, preferably, the outside filter medium is constituted so as to form the bag shape in which the bag-shaped filter medium is housed inside.

Usually, the fuel is sent to the fuel flow passage through the internal space of the bag-shaped filter medium so as to be the outside filter medium as a pre-filter and the bag-shaped filter medium as a main filter. In the case when the fuel is lowered in fluidity by the temperature change, when such fuel passes through the outside filter medium which is constituted coarsely, the fuel is cut by the outside filter medium so as to enter into the inside of the outside filter medium. However, if the bag-shaped filter medium is clogged with the fuel entered in the above-mentioned manner, the inside of the bag-shaped filter medium is a negative pressure due to the suction of the fuel, so that a pressure difference between the inside and outside of this bag-shaped filter medium becomes significantly large. In the fuel filter according to a preferred embodiment, in such a case, the stagnation of the fuel into the communicating portion is resolved, and the fuel, which was taken into the inside of the outside filter medium in such a way as to be finely cut by the outside filter medium, can be sent to the fuel flow passage through this communicating portion.

### Effect of the Invention

In the fuel filter according to the present invention, by adjusting the interval between the inner walls which constitute the communicating portion and are located at the opposite positions, a filter including a function of allowing the fuel to flow into the fuel flow passage through the communicating portion without allowing the fuel to pass through the main filter only when the fuel is lowered in fluidity by the temperature change, can be provided with a simple structure. Also, if the outside filter medium is provided, filtering by the outside filter medium can be carried out even relative to the fuel received from the communicating portion in the above-mentioned manner. Also, as long as the outside filter medium is saturated with the fuel, the fuel can be sucked up through the communicating portion without any effect of a decline in a fluid surface level of the stored fuel.

### Brief Description of the Drawings

Fig. 1 is a plan structural view of a filter.
Fig. 2 is a cross-sectional structural view at a corresponding position taken along line A-A in Fig. 1 showing a usage state of the filter.
Fig. 3 is a plan structural view of a connection connector, a built-in part, and a male communicating portion formation part.
Fig. 4 is a cross-sectional view taken along line B-B in Fig. 3.
Fig. 5 is a perspective structural view of the connection connector, the built-in part, and the male communicating portion formation part.
Fig. 6 is an exploded perspective structural view of essential parts of the same.
Fig. 7 is a cross-sectional structural view at a corresponding position taken along line D-D in Fig. 8 showing a usage state of the filter whose one portion of the structure shown in Figs. 1 to 6 is modified.
Fig. 8 is a plan structural view of the same.
Fig. 9 is a perspective structural view of the same.
Fig. 10 is a perspective structural view in a state wherein a cover body is removed.
Fig. 11(a) is a horizontal sectional structural view at a corresponding position taken along line C-C in Fig. 7 showing a first modified example of a communicating portion of the example shown in Fig. 7, and Fig. 11(b) is a vertical sectional structural view of the essential parts.
Fig. 12 is a horizontal sectional structural view at the corresponding position taken along line C-C in Fig. 7 showing a second modified example of the communicating portion of the example shown in Fig. 7.

### Best Modes of Carrying out the Invention

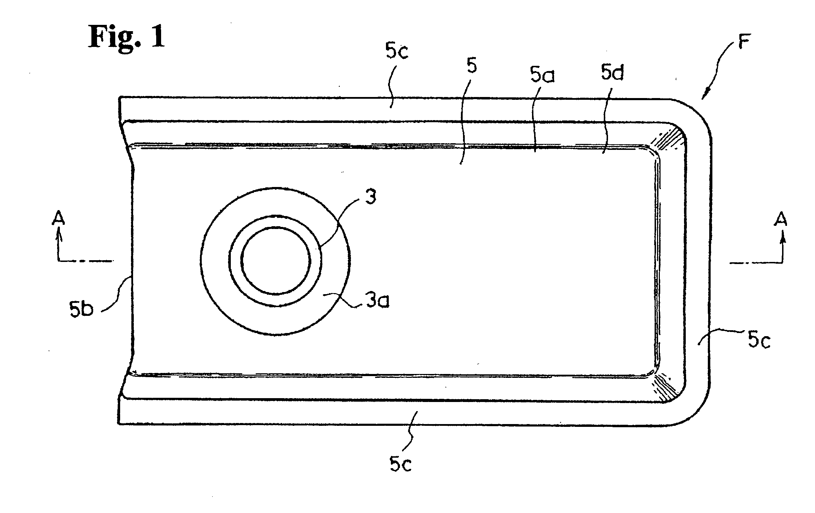

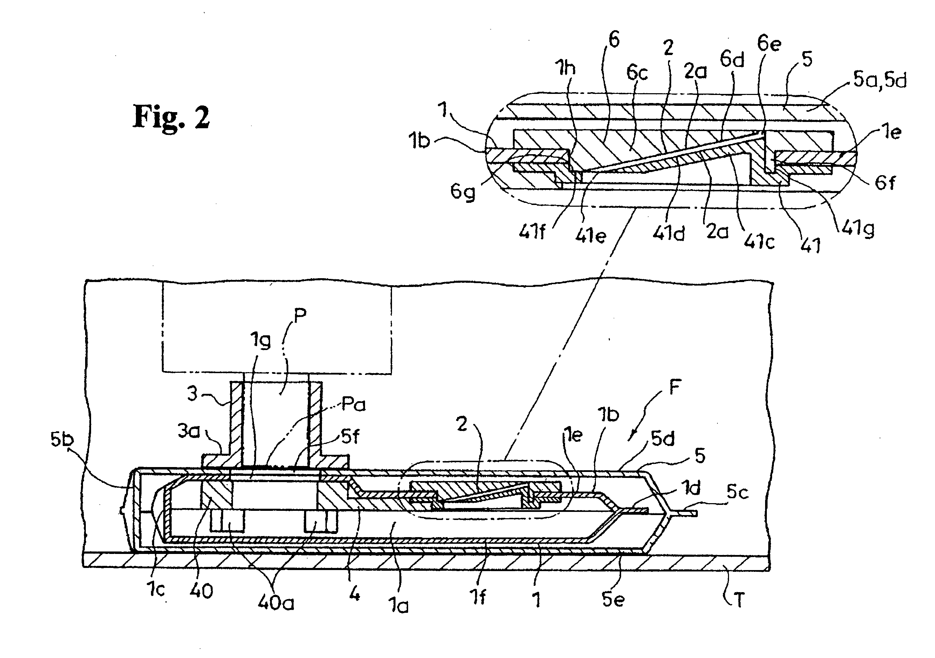

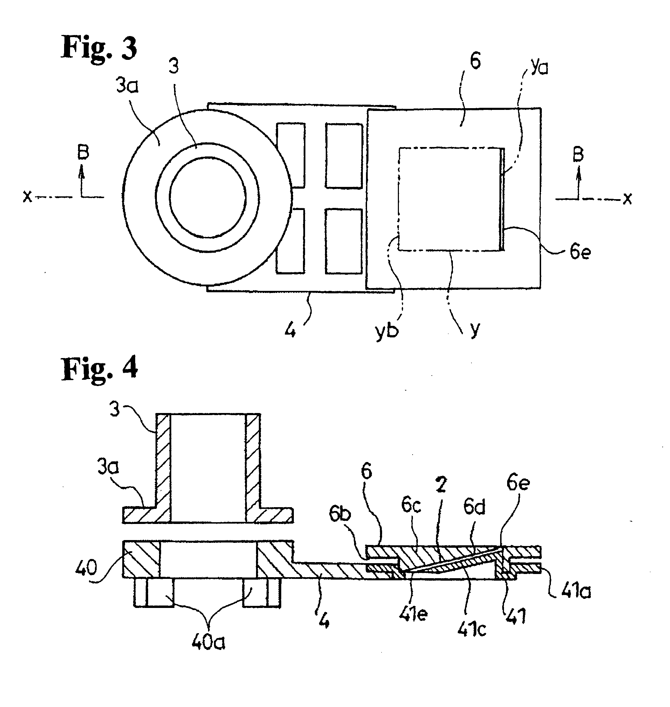

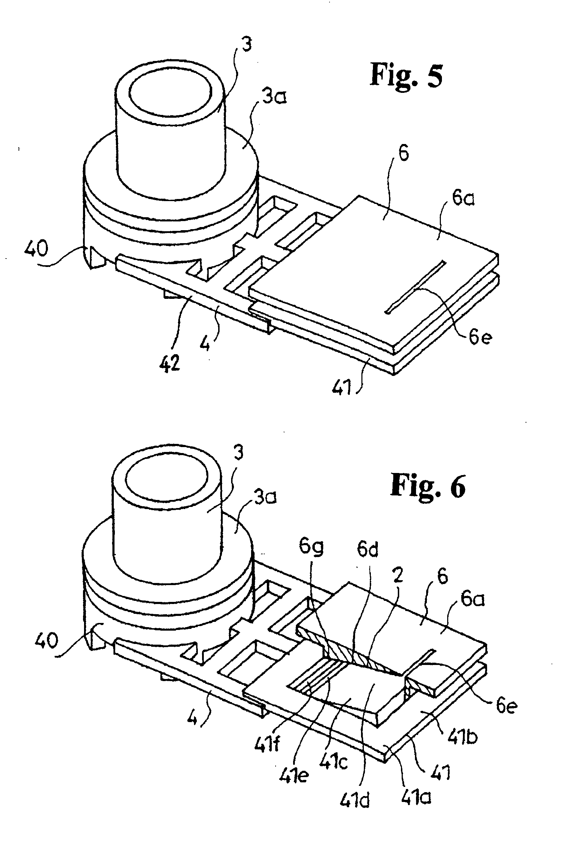

Hereinafter, one of embodiments for carrying out the present invention will be explained with reference to Figs. 1 to 6. Incidentally, here, Fig. 1 shows a device for filtering fuel constituted by applying the present invention, i.e., shows a filter F viewed from above; Fig. 2 shows a cross-section of a usage state wherein a lower surface 5e of an outside filter medium 5 constituting this filter F is contacted with an inner bottom surface of a fuel tank T; and Figs. 3 to 6 show a connection connector 3, a built-in part 4, and a male communicating portion formation part 6 constituting such filter F, respectively.

The filter F according to the present embodiment is used for filtering fuel in a system sucking and supplying stored fuel having a property of lowering fluidity by a temperature change.

Typically, such filter F is used for filtering the fuel supplied to an internal combustion engine such as an automobile. In this case, fuel inside the fuel tank T is sucked out by a fuel pump and sent to the internal combustion engine through a fuel flow passage P. The filter F is typically provided at an end of a fuel tank T side of such fuel flow passage P, or in the middle of the fuel flow passage P, and is used for filtering fuel passing through.

In an illustrated example, such filter F is an in-tank-type fuel filter (also called a suction filter F and the like) which is attached in such a way as to cover a fuel suction opening Pa constituting the fuel flow passage P positioned inside the fuel tank T; is positioned on a bottom side of the fuel tank T; and filters the fuel sucked into this fuel suction opening Pa. Also, in the illustrated example, such filter F comprises a function of adequately filtering light oil under a circumstance wherein the light oil is not significantly lowered in liquidity, and also a function of not preventing an inflow of the light oil into the fuel flow passage P under a circumstance wherein the light oil is significantly lowered in fluidity. In light oil, a wax crystal is produced at a time of a low temperature, and in winter season, the fluidity thereof is significantly lowered and the light oil becomes gel-like (Called waxed and the like). In the filter F comprising an illustrated structure, in a case when the light oil is significantly lowered in fluidity in this manner, and the after-mentioned main filter (a bag-shaped filter medium 1) is clogged, the filter F allows the suction of such light oil by another route (a communicating portion).

Such filter F comprises the bag-shaped filter medium 1 which becomes the main filter. Then, the filter F is constituted such that an internal space 1a of this bag-shaped filter medium 1, i.e., a space inside a bag is communicated with the fuel flow passage P.

In the illustrated example, the bag-shaped filter medium 1 is constituted in such a way as to communicate the internal space 1a thereof with the fuel flow passage P through the connection connector 3 for the fuel flow passage P. In the illustrated example, such connection connector 3 is constituted in such a way as to form a tube shape comprising an outside collar 3a at one end of a tube. In the illustrated example, inside the bag-shaped filter medium 1, the built-in part 4, which is constituted by connecting a short-sized tube-like body 40 and a female communicating portion formation part 41 by a connecting bone body 42 such that a tube shaft of the short-sized tube-like body 40 follows in an up-and-down direction, is housed. This short-sized tube-like body 40 opens at both a tube upper end and a tube lower end. Then, in the illustrated example, from a state wherein the bag-shaped filter medium 1 and the after-mentioned outside filter medium 5 are sandwiched between the outside collar 3a of the connection connector 3 and the tube upper end of the short-sized tube-like body 40 of the built-in part 4, this outside collar 3a and the tube upper end are firmly fixed by welding and the like, so that the connection connector 3 is connected to the bag-shaped filter medium 1. More specifically, in the illustrated example, the bag-shaped filter medium 1 is formed by folding a sheet-like filter medium 1b constituted so as to be elongated in two at a position of approximately the middle of a length direction, and also by applying a heat seal 1d on three sides except for a folded side 1c. The built-in part 4 is housed in such a way that a tube internal space of the short-sized tube-like body 40 is communicated with a first through-bore 1g formed on a folded side 1c side in an upper surface 1e between the upper surface 1e and a lower surface 1f sandwiching the folded side 1c in a process of folding this sheet-like filter medium 1b in two. The after-mentioned outside filter medium 5 is also formed by folding the sheet-like filter medium 1b constituted so as to be elongated in two at the position of approximately the middle of the length direction, and also by applying a heat seal 5c on three sides except for a folded side 5b. (Fig. 1) The bag-shaped filter medium 1, wherein the built-in part 4 is built in and also the after-mentioned male communicating portion formation part 6 is additionally provided, is housed in such a way that the first through-bore 1g thereof is communicated with a through-bore 5f formed on an upper surface 5d between the upper surface 5d and the lower surface 5e sandwiching the folded side 5b in the process of folding the sheet-like filter medium 1b in two constituting this outside filter medium 5. The above-mentioned fixation is carried out in such a way that the outside collar 3a of the connection connector 3 is attached firmly to a bore edge of the through-bore 5f thereof relative to the outside filter medium 5 wherein the bag-shaped filter medium 1 is housed in the above-mentioned manner, so that the filter F is formed. In the tube lower end of the short-sized tube-like body 40 of the built-in part 4, plural interval formation projections 40a are formed at an interval between the interval formation projections 40a which are adjacent in a direction around the tube shaft thereof. Accordingly, a situation, in which one portion of the bag-shaped filter medium 1, which is positioned just below this tube lower end, sticks to the tube lower end due to a negative pressure, so that the whole bag-shaped filter medium 1 cannot contribute to filtering, can be prevented.

Also, in the bag-shaped filter medium 1, a communicating portion 2 between the inside and outside of the bag is formed in another portion from the communicating portion with the above-mentioned fuel flow passage P. In such communicating portion 2, an interval between inner walls 2a, which constitute this communicating portion 2 and are located at opposite positions, has a size so as to usually allow the fuel to stagnate in the communicating portion 2 by a surface tension. Also, the interval between the inner walls 2a has the size so as to allow this fuel which has been lowered in fluidity to flow into the bag-shaped filter medium 1 when the bag-shaped filter medium 1 is clogged with the fuel which has been lowered in fluidity by the temperature change. Also, this communicating portion 2 is covered from the outside by the outside filter medium 5 constituted so as to be coarser than the bag-shaped filter medium 1.

In the illustrated example, the outside filter medium 5 is constituted so as to form a bag shape in which the bag-shaped filter medium 1 is housed inside the bag. Thereby, the above-mentioned communicating portion 2 is covered by the outside filter medium 5. Specifically, in the illustrated example, after the fuel passes through the outside filter medium 5, the fuel passes through the bag-shaped filter medium 1, and the outside filter medium 5 plays a role as a pre-filter. Also, such outside filter medium 5 is constituted in such a way as to have coarseness so as not to be clogged with gel-like light oil. Specifically, a bore diameter or an average bore diameter of a passing bore of fine fuel in the outside filter medium 5 is larger than a bore diameter or an average bore diameter of the same passing bore of the bag-shaped filter medium 1, and also has a size so as not to be clogged with the gel-like light oil. In a case that such outside filter medium 5 and the bag-shaped filter medium 1 are both made of a mesh material, it is preferable to make the bore diameter of the passing bore of the outside filter medium 5 in a range of 170 to 500 µm, and it is preferable to make the bore diameter of the passing bore of the bag-shaped filter medium 1 in a range of 20 to 150 µm. Such bag-shaped filter medium 1 and the outside filter medium 5 can be constituted by an extrusion mesh material, a fabric mesh material, a nonwoven fabric, and the like.

Also, in the illustrated example, the above-mentioned communicating portion 2 is constituted by using a second through-bore 1h which is on an upper surface of the sheet-like filter medium 1b constituting the bag-shaped filter medium 1 and is formed in a portion which is away from the above-mentioned folded side 1c rather than the above-mentioned first through-bore 1g. In the illustrated example, such communicating portion 2 is constituted by combining the male communicating portion formation part 6 and the female communicating portion formation part 41 through such second through-bore 1h.

More specifically, in the illustrated example, the female communicating portion formation part 41 of the built-in part 4 comprises a plate-like base portion 41a; an inner wall formation portion 41c of one of the inner walls 2a of the above-mentioned communicating portion 2 formed on an upper surface of this plate-like base portion 41a; and a secondary side opening 41e which becomes an opening of an internal space 1a side of the bag-shaped filter medium 1 in the communicating portion 2. Such inner wall formation portion 41c is formed inside the plate-like base portion 41a in such a way as to follow an outline of an imaginary quadrangle y (quadrangle shown with chain double-dashed lines in Fig. 3) whose one of four sides is a side perpendicular to an imaginary center line x of the built-in part 4 connecting the above-mentioned short-sized tube-like body 40 and this female communicating portion formation part 41. The inner wall formation portion 41c includes an inclined upper surface 41d gradually lowering from one side ya side, which is the furthest away from the short-sized tube-like body 40 among the four sides of such imaginary quadrangle y, toward the other side yb side which is parallel to the one side ya side. The above-mentioned one side ya side in such inclined upper surface 41d is projected from an upper surface 41b of the plate-like base portion 41a, and the above-mentioned other side yb side is positioned on a lower side than the upper surface 41b of the plate-like base portion 41a. (Fig. 4) The secondary side opening 41e is a slit formed between this other side yb and the lowest end of the inclined upper surface 41d of the inner wall formation portion 41c along such other side yb. Also, a receiving surface 41f facing an upside is formed between this other side yb and the secondary side opening 41e. Also, a fitting groove 41g along the above-mentioned one side ya is formed on a lateral side of the uppermost end of the inclined upper surface 41d, and this receiving surface 41f and a groove bottom of the fitting groove 41g are positioned in the same level. (Fig. 4) On the other hand, the male communicating portion formation part 6 comprises a plate-like base portion 6a; an inner wall formation portion 6c of the other inner wall 2a of the above-mentioned communicating portion 2 formed on an lower surface 6b of this plate-like base portion 6a; and a primary side opening 6e which becomes an opening of an outside of the bag-shaped filter medium 1 in the communicating portion 2. Such inner wall formation portion 6c is also formed inside the plate-like base portion 6a in such a way as to follow the outline of the above-mentioned imaginary quadrangle y whose one of the four sides is the side perpendicular to the above-mentioned imaginary center line x. The inner wall formation portion 6c includes an inclined lower surface 6d gradually lowering from the one side ya side, which is the furthest away from the short-sized tube-like body 40 among the four sides of such imaginary quadrangle y, toward the other side yb side which is parallel to the one side ya side. The above-mentioned other side yb side in such inclined lower surface 6d projects most from a lower surface of the plate-like base portion 6a, and as the inclined lower surface 6d goes from the other side yb side toward the one side ya side, a projecting size from the lower surface 6b of the plate-like base portion 6a of the inner wall formation portion 6c decreases. The primary side opening 6e is a slit formed along such one side ya. Also, on a slit edge opposite to a slit edge on an inclined lower surface 6d side in this primary side opening 6e, a fitting projection 6f projecting downwardly is formed throughout this slit edge. Also, on a lateral side of the lowest end of the inclined lower surface 6d, a received surface 6g is formed throughout the above-mentioned other side yb.

Then, in the illustrated example, the male communicating portion formation part 6 is combined with the female communicating portion formation part 41 of the built-in part 4 housed in the bag-shaped filter medium 1 through the second through-bore 1h in such a way that the inclined upper surface 41d and the inclined lower surface 6d face to each other; that the received surface 6g is contacted with the above-mentioned receiving surface 41f; and that the fitting projection 6f is completely entered into the above-mentioned fitting groove 41g. Accordingly, an interval, which usually allows the fuel to stagnate inside the communicating portion 2 by the surface tension, and also allows this fuel which has been lowered in fluidity to flow into the bag-shaped filter medium 1 when the bag-shaped filter medium 1 is clogged with the fuel which has been lowered in fluidity by the temperature change, is formed between such inclined upper surface 41d and the inclined lower surface 6d throughout the primary side opening 6e and the secondary side opening 41e. In a case when such interval is set in a range of 0.4 mm to 0.5 mm, at least in a case when the fuel is light oil, a desired effect is obtained. A bore edge of the second through-bore 1h of the bag-shaped filter medium 1 is sandwiched between the lower surface 6b of the plate-like base portion 6a which is located in a portion surrounding the inner wall formation portion 6c of the male communicating portion formation part 6, and the upper surface 41b of the plate-like base portion 41a which is located in a portion surrounding the inner wall formation portion 41c of the female communicating portion formation part 41, combined in the above-mentioned manner.

Usually, the fuel is sent to the fuel flow passage P through the internal space 1a of the bag-shaped filter medium 1 as the pre-filter of the outside filter medium 5, and as the main filter of the bag-shaped filter medium 1. In the case when the fuel is lowered in fluidity by the temperature change, in case such fuel passes through the outside filter medium 5 which is constituted coarsely, the fuel is cut up by the outside filter medium 5 so as to enter into the inside of the outside filter medium 5. However, if the bag-shaped filter medium 1 is clogged with the fuel entered in the above-mentioned manner, the inside of the bag-shaped filter medium 1 is a negative pressure due to the suction of the fuel, so that a pressure difference between the inside and outside of this bag-shaped filter medium 1 becomes significantly large. In the fuel filter F constituted in the above-mentioned manner, in such a case, the stagnation of the fuel into the communicating portion 2 is resolved, and the fuel, which was taken into the inside of the outside filter medium 5 in such a way as to be finely cut up by the outside filter medium 5, can be sent to the fuel flow passage P through this communicating portion 2. As long as the outside filter medium 5 is saturated with the fuel, the fuel can be sucked through the communicating portion 2 without any effect of a decline in a fluid surface level of the stored fuel.

In the illustrated example, in such communicating portion 2, both the primary side opening 6e and the secondary side opening 41e are a slit, and both openings 6e and 41e are connected by the inclined upper surface 41d (inner walls 2a) and the inclined lower surface 6d (inner walls 2a) which are placed at an interval which allows the fuel to stagnate by the above-mentioned surface tension. However, if the communicating portion 2 has a shape so that the fuel can inflow at a time of such stagnation of the fuel and a decline in fluidity, the communicating portion 2 does not have to be declined. Also, the communicating portion 2 may be a simple bore shape in which a bore diameter, i.e., the interval between both inner walls 2a, 2a which are in a diametrical direction is the interval allowing the above-mentioned stagnation of the fuel.

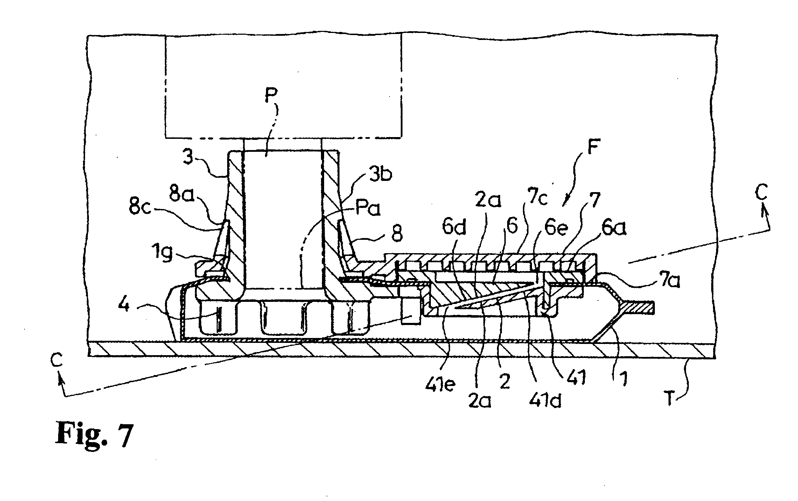

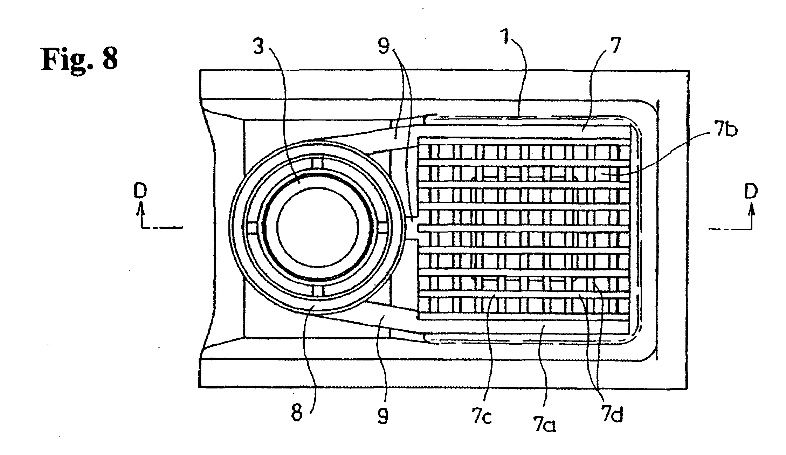

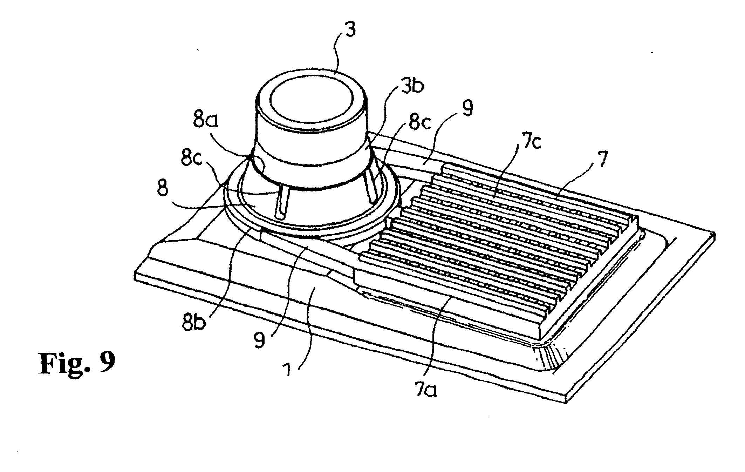

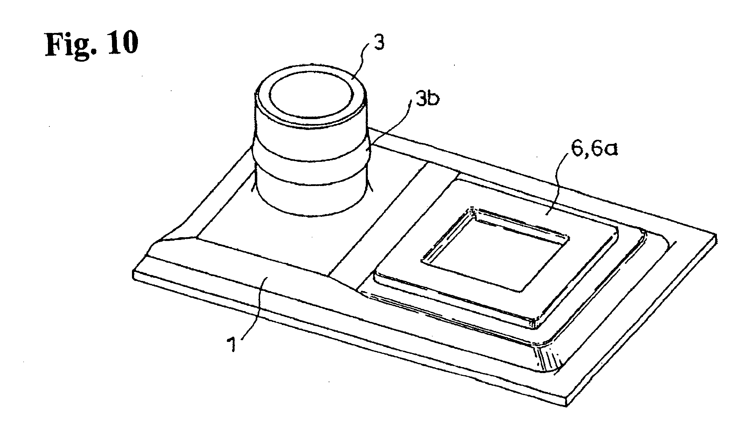

Next, based on Figs. 7 to 10, another embodiment for carrying out the present invention will be explained. The fuel filter F shown in Figs. 7 to 10 differs from the fuel filter F shown in Figs. 1 to 6 in that instead of the outside filter medium 5 of the fuel filter F shown in Figs. 1 to 6, a cover body 7 functioning as in this outside filter medium 5 is provided. Also, the fuel filter F shown in Figs. 7 to 10 differs from the fuel filter F shown in Figs. 1 to 6 in that the built-in part 4 and the connection connector 3 are integrated. For the rest, the fuel filter F shown in Figs. 7 to 10 is substantively the same as the fuel filter F shown in Figs. 1 to 6. (Regarding the substantively same structural portions, the same symbols used in Figs. 1 to 6 are assigned to the portions in Figs. 7 to 10.)

Such cover body 7 is combined with the communicating portion 2 from the outside of the bag-shaped filter medium 1. In the illustrated example, such cover body 7 comprises a frame portion 7a following an outer outline shape of the plate-like base portion 6a of the male communicating portion formation part 6. The plate-like base portion 6a of the male communicating portion formation part 6 is square-shaped in a plan view. Therefore, this frame portion 7a is also constituted so as to be square-shaped following the plate-like base portion 6a. A frame internal space 7b of such frame portion 7a is covered by a grid-like body 7c constituted by plural bar bodies 7d, 7d ... which bridge between two opposite sides among four sides of this frame portion 7a, and plural bar bodies 7d, 7d ... which bridge between the rest of the two opposite sides. Then, in this example, the cover body 7 and the communicating portion 2 are combined by fitting the male communicating portion formation part 6 in the inside of the frame portion 7a of the cover body 7. Then, by the grid-like body 7c of the cover body 7 combined in the above-mentioned manner, the communicating portion 2 is covered from the outside of the bag-shaped filter medium 1. Specifically, in the illustrated example, such grid-like body 7c of the cover body 7 functions as the outside filter medium 5 in the example shown in Figs. 1 to 6. According to the above-mentioned cover body 7, a portion having the same function as that of the outside filter medium 5 can be adequately provided in the bag-shaped filter medium 1 wherein the communicating portion 2 is provided in the minimum necessary range.

Also, in the illustrated example, such cover body 7 is connected to a short-sized tube-like body 8 which is fitted in the connection connector 3 from outside. Such short-sized tube-like body 8 is constituted in such a way that an inner diameter gradually decreases as the short-sized tube-like body 8 goes from a tube lower end 8b to a tube upper end 8a. Also, the cover body 7 and this short-sized tube-like body 8 are integrated by connecting one side of the frame portion 7a of the cover body 7 and the tube lower end 8b of the short-sized tube-like body 8 by connecting pieces 9. On the other hand, in this example, a circling projection 3b is formed between upper and lower ends of the connection connector 3, and an inner diameter of the tube upper end 8a of the short-sized tube-like body 8 is made slightly smaller than an outer diameter of the connection connector 3 at this circling projection 3b position. Thereby, in this example, in a process wherein the connection connector 3 is entered into the inside of the short-sized tube-like body 8 from an upper end side thereof, the inner diameter of the tube upper end 8a of the short-sized tube-like body 8 is once bent and spread by the circling projection 3b, and the tube upper end 8a is entered into the downside of this circling projection 3b. After that, due to this bending and returning of the tube upper end 8a, the short-sized tube-like body 8 is fixed to the connection connector 3 with a single touch, and the cover body 7 can be stably positioned on the communicating portion 2 through the short-sized tube-like body 8 which is fixed in the above-mentioned manner. Also, a bore edge of the first through-bore 1g of the bag-shaped filter medium 1 is sandwiched between the short-sized tube-like body 8 attached in the above-mentioned manner and the built-in part 4 integrated with the connection connector 3, from inside and outside. In the illustrated example, in the short-sized tube-like body 8, a dividing groove 8c, which opens in the tube upper end 8a thereof and goes toward a tube lower end 8b side, is formed, and the above-mentioned bending deformation is smoothly carried out. Typically, such cover body 7 and short-sized tube-like body 8 are constituted as a molded product made of a synthetic resin material.

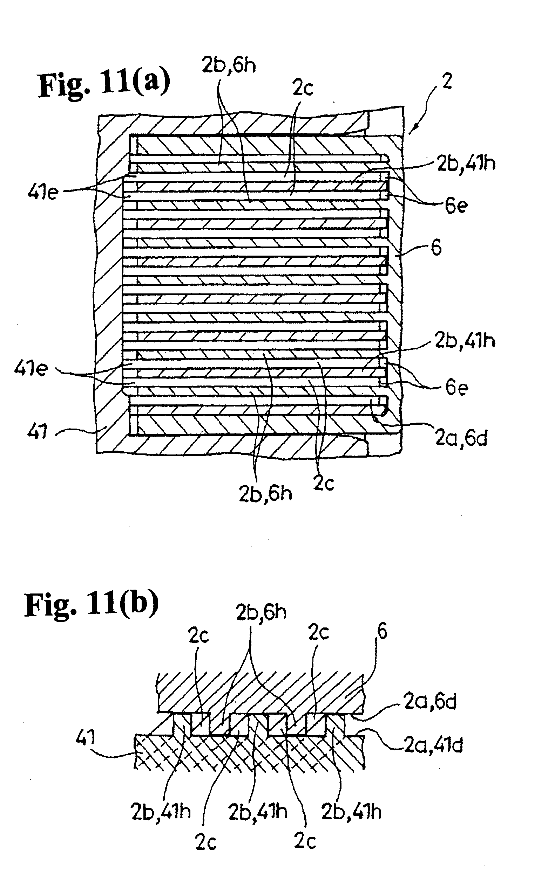

Next, Figs. 11(a) and 11(b) show an example in which the communicating portion 2 of the fuel filter F shown in Figs. 7 to 10 is divided into plural flow passages 2c, 2c ... by dividing walls 2b ranging between the inner walls 2a, 2a which constitute this communicating portion 2 and are located at the opposite positions. In this example shown in Figs. 11(a), 11(b), plural upper side ribs 6h, linearly ranged from the above-mentioned primary side openings 6e to the secondary side openings 41e, are formed in the inclined lower surface 6d of the male communicating portion formation part 6 by providing an interval between adjacent upper side ribs 6h. Also, plural lower side ribs 41h, linearly ranged from the above-mentioned primary side openings 6e to the secondary side openings 41e, are formed in the inclined upper surface 41d of the female communicating portion formation part 41 by providing an interval between adjacent lower side ribs 41h. Then, in a state wherein both the communicating portion formation parts 6, 41 are combined, the upper side ribs 6h and the lower side ribs 41h are adjacent to each other by providing intervals which become the flow passages 2c between both sides. Specifically, the interval between the above-mentioned inclined upper surface 41d and the inclined lower surface 6d, and a projecting size of both the ribs 6h and 41h correspond to each other. Thereby, both the ribs 6h and 41h function as the above-mentioned dividing walls 2b. Thereby, in this example shown in Figs. 11(a) and 11(b), the entry of the fuel into the bag-shaped filter medium 1 through the communicating portion 2 at a normal time, can be further prevented.

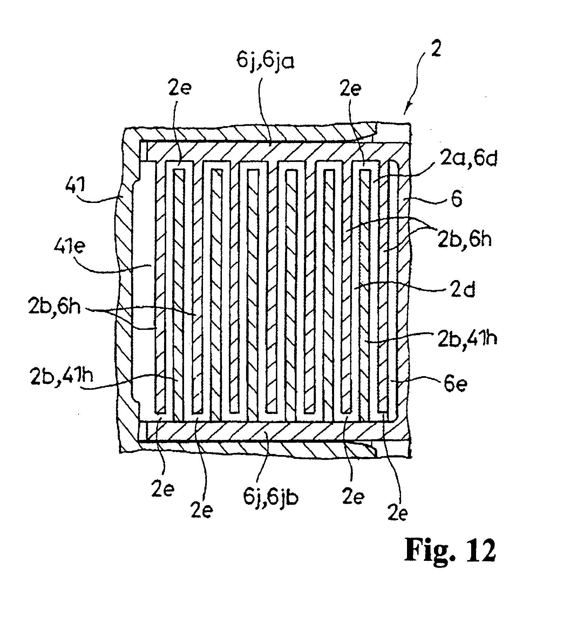

Next, Fig. 12 shows an example in which a portion ranging from the primary side openings 6e which become an opening of a bag outside of the bag-shaped filter medium 1 in the communicating portion 2 and the secondary side opening 41e which becomes an opening of a bag inside of the bag-shaped filter medium 1 in the communicating portion 2, is made as a meandering flow passage 2d by the dividing walls 2b ranging between the inner walls 2a, 2a, which constitute the communicating portion 2 and are located at the opposite positions, of the fuel filter F shown in Figs. 7 to 10. In this example shown in Fig. 12, dividing ribs 6j, which are located on both sides of the above-mentioned primary side openings 6e; extend in a direction perpendicular to the primary side openings 6e respectively formed in a slit shape; and reach the secondary side opening 41e, are formed in the inclined lower surface 6d of the male communicating portion formation part 6. Also, the plural upper side ribs 6h, whose one end is integrally connected to one dividing rib 6ja, and which extend toward the other dividing rib 6jb side, and are formed in such a way as to leave spaces which become bent portions 2e of the meandering flow passage 2d between the upper side ribs 6h and the other dividing rib 6jb, are formed by providing an interval between the adjacent upper side ribs 6h. At the same time, the plural lower side ribs 41h, which are positioned between the adjacent upper side ribs 6h in such a way as to leave spaces which become linear portions of the meandering flow passage 2d between the lower side ribs 41h and the upper side ribs 6h, are formed in the inclined upper surface 41d of the female communicating portion formation part 41. Then, one end of the rib of such lower side rib 41h contacts with the above-mentioned other dividing rib 6jb, and the spaces which become the bent portions 2e of the meandering flow passage 2d is provided between the other end of the rib and the above-mentioned one dividing rib 6ja. Specifically, the interval between the above-mentioned inclined upper surface 41d and the inclined lower surface 6d, and a projecting size of the respective ribs 6h, 6j, and 41h correspond to each other. Thereby, the respective ribs 6h, 6j, and 41h function as the above-mentioned dividing walls 2b. Thereby, even in this example shown in Fig. 12, the entry of the fuel into the bag-shaped filter medium 1 through the communicating portion 2 at the normal time, can be further prevented.

Incidentally, all contents of the specifications, claims, drawings, and abstracts of Japanese Patent Applications No. 2008-226118 filed on September 3, 2008 and No. 2009-5623 filed on January 14, 2009 are cited in their entireties herein and are incorporated as a disclosure of the specification of the present invention.

## Claims

1. A fuel filter comprising a communicating portion (2) between an inside and an outside of a bag in a bag-shaped filter medium (1) which is used by communicating an internal space with a fuel flow passage (P),
wherein the communicating portion (2) is constituted by combining a male communicating portion formation part (6) and a female communicating portion formation part (41), and
an interval between inner walls (2a) of the male communicating portion formation part (6) and the female communicating portion formation part (41), which constitute the communicating portion (2) and are located at opposite positions, has a size so as to usually allow the fuel to stagnate in the communicating portion (2) by a surface tension, and when the bag-shaped filter medium (1) is clogged with the fuel which has been lowered in fluidity by a temperature change, the interval between the inner walls (2a) has a size so as to allow the fuel which has been lowered in fluidity to flow into the bag-shaped filter medium (1).

2. A fuel filter according to claim 1, wherein the communicating portion (2) is divided into plural flow passages by a dividing wall ranging between the inner walls (2a) which constitute the communicating portion (2) and are located at the opposite positions.

3. A fuel filter according to claim 1, wherein due to a dividing wall ranging between the inner walls (2a) which constitute the communicating portion (2) and are located at the opposite positions, a portion, ranging from a primary side opening which becomes an opening of a bag outside of the bag-shaped filter medium (1) in the communicating portion (2) and a secondary side opening which becomes an opening of a bag inside of the bag-shaped filter medium (1) in the communicating portion (2), is made as a meandering flow passage.

4. A fuel filter according to any one of claims 1 to 3, wherein the communicating portion (2) is covered from the outside of the bag-shaped filter medium (1) by an outside filter medium (5) constituted so as to be coarser than the bag-shaped filter medium (1).

5. A fuel filter according to claim 4, wherein the outside filter medium (5) is constituted so as to form a bag shape in which the bag-shaped filter medium (1) is housed inside.

6. A fuel filter according to claim 4, wherein a cover body, combined with the communicating portion (2) from the outside of the bag-shaped filter medium (1), functions as the outside filter medium (5).

7. A fuel filter according to claim 1, wherein a bore diameter of an outside filter medium (5) is in a range of 170 to 500 µm, and a bore diameter of the bag-shaped filter medium (1) is in a range of 20 to 150 µm, and
the interval is set in a range of 0.4 mm to 0.5 mm.

## Patentansprüche

1. Kraftstofffilter, umfassend einen Verbindungsabschnitt (2) zwischen einer Innenseite und einer Außenseite eines Beutels in einem beutelförmigen Filtermedium (1), welches zur Verbindung eines Innenraums mit einer Kraftstoffdurchflussführung (P) verwendet wird,
wobei der Verbindungsabschnitt (2) durch Kombination eines männlichen Verbindungsabschnitt-Bildungsteils (6) und eines weiblichen Verbindungsabschnitt-Bildungsteils (41) ausgebildet ist, und
wobei ein Intervall zwischen Innenwänden (2a) des männlichen Verbindungsabschnitt-Bildungsteils (6) und des weiblichen Verbindungsabschnitt-Bildungsteils (41), welche den Verbindungsabschnitt (2) ausbilden und an gegenüberliegenden Positionen angeordnet sind, eine solche Größe aufweist, dass der Kraftstoff im Verbindungsabschnitt (2) durch eine Oberflächenspannung stehen kann, und wobei, wenn das beutelförmige Filtermedium (1) mit dem Kraftstoff verstopft ist, welcher in der Fließfähigkeit durch eine Temperaturänderung herabgesetzt worden ist, das Intervall zwischen den Innenwänden (2a) eine solche Größe aufweist, dass der Kraftstoff, welcher in der Fließfähigkeit herabgesetzt worden ist, in das beutelförmige Filtermedium (1) fließen kann.

2. Kraftstofffilter nach Anspruch 1, wobei der Verbindungsabschnitt (2) in mehrere Durchflussführungen durch eine Trennwand getrennt ist, welche sich zwischen den Innenwänden (2a) erstreckt, welche den Verbindungsabschnitt (2a) ausbilden und an den gegenüberliegenden Positionen angeordnet sind.

3. Kraftstofffilter nach Anspruch 1, wobei aufgrund einer Trennwand, welche sich zwischen den Innenwänden (2a) erstreckt, welche den Verbindungsabschnitt (2) ausbilden und an den gegenüberliegenden Positionen angeordnet sind, ein Abschnitt, welcher sich von einer Primärseitenöffnung, welche einen Öffnung einer Beutelaußenseite des beutelförmigen Filtermediums (1) im Verbindungsabschnitt (2) ist, zu einer Sekundärseitenöffnung erstreckt, welche eine Öffnung einer Beutelinnenseite des beutelförmigen Filtermediums (1) im Verbindungsabschnitt (2) ist, als mäanderförmige Durchflussführung ausgeführt ist.

4. Kraftstofffilter nach einem der Ansprüche 1 bis 3, wobei der Verbindungsabschnitt (2) von der Außenseite des beutelförmigen Filtermediums (1) durch ein äußeres Filtermedium (5) so ausgebildet ist, dass es gröber als das beutelförmige Filtermedium (1) ist.

5. Kraftstofffilter nach Anspruch 4, wobei das äußere Filtermedium (5) so ausgebildet ist, dass es eine Beutelform bildet, in welcher das beutelförmige Filtermedium (1) im Inneren untergebracht ist.

6. Kraftstofffilter nach Anspruch 4, wobei ein Abdeckkörper, welcher mit dem Verbindungsabschnitt (2) von der Außenseite des beutelförmigen Filtermediums (1) verknüpft ist, als das äußere Filtermedium (5) wirkt.

7. Kraftstofffilter nach Anspruch 1, wobei ein Bohrungsdurchmesser von einem äußeren Filtermedium (5) in einem Bereich von 170 bis 500 µm liegt und ein Bohrungsdurchmesser des beutelförmigen Filtermediums (1) in einem Bereich von 20 bis 150 µm liegt, und das Intervall in einem Bereich von 0,4 mm bis 0,5 mm eingestellt wird.

## Revendications

1. Filtre à carburant comprenant une partie communicante (2) entre un intérieur et un extérieur d'une manche dans un média filtrant en forme de manche (1) qui sert à la communication d'un espace interne avec un passage d'écoulement de carburant (P),
dans lequel la partie communicante (2) est constituée en combinant un élément de formation de partie communicante mâle (6) et un élément de formation de partie communicante femelle (41), et
un intervalle entre des parois internes (2a) de l'élément de formation de partie communicante mâle (6) et l'élément de formation de partie communicante femelle (41), qui constituent la partie communicante (2) et qui sont situées à des positions opposées, a une taille de manière à permettre généralement au carburant de stagner dans la partie communicante (2) par une tension superficielle, et lorsque le média filtrant en forme de manche (1) est bouché par le carburant qui a été diminué en fluidité par un changement de température, l'intervalle entre les parois internes (2a) a une taille de manière à permettre au carburant qui a été diminué en fluidité de s'écouler dans le média filtrant en forme de manche (1).

2. Filtre à carburant selon la revendication 1, dans lequel la partie communicante (2) est divisée en plusieurs passages d'écoulement par une paroi de séparation comprise entre les parois internes (2a) qui constituent la partie communicante (2) et qui sont situées à des positions opposées.

3. Filtre à carburant selon la revendication 1, dans lequel en raison d'une paroi de séparation comprise entre les parois internes (2a) qui constituent la partie communicante (2) et qui sont situées à des positions opposées, une partie s'étendant à partir d'une ouverture côté primaire qui devient une ouverture d'une manche à l'extérieur du média filtrant en forme de manche (1) dans la partie communicante (2) et une ouverture côté secondaire qui devient une ouverture d'une manche à l'intérieur du média filtrant en forme de manche (1) dans la partie communicante (2), est réalisée en tant que passage d'écoulement sinueux.

4. Filtre à carburant selon l'une des revendications 1 à 3, dans lequel la partie communicante (2) est recouverte à partir de l'extérieur du média filtrant en forme de manche (1) par un média filtrant extérieur (5) constitué de façon à être plus grossier que le média filtrant en forme de manche (1).

5. Filtre à carburant selon la revendication 4, dans lequel le média filtrant extérieur (5) est constitué de façon à former une forme de manche à l'intérieur de laquelle le média filtrant en forme de manche (1) est logé.

6. Filtre à carburant selon la revendication 4, dans lequel un corps de couvercle qui est combiné avec la partie communicante (2) à partir de l'extérieur du média filtrant en forme de manche (1) fait office de média filtrant extérieur (5).

7. Filtre à carburant selon la revendication 1, dans lequel un diamètre d'alésage d'un média filtrant extérieur (5) est compris dans une plage de 170 à 500 µm, et un diamètre d'alésage du média filtrant en forme de manche (1) est compris dans une plage de 20 à 150 µm, et
l'intervalle est défini dans une plage de 0,4 mm à 0,5 mm.
